(19) Europäisches Patentamt / European Patent Office / Office européen des brevets

(11) **EP 2 816 890 B1**

(12) **EUROPEAN PATENT SPECIFICATION**

(45) Date of publication and mention
of the grant of the patent:
**21.11.2018 Bulletin 2018/47**

(21) Application number: **13720092.9**

(22) Date of filing: **25.02.2013**

(51) Int Cl.:
*A01G 9/24* $^{(2006.01)}$     *A23B 7/148* $^{(2006.01)}$
*A23L 3/3418* $^{(2006.01)}$

(86) International application number:
**PCT/NL2013/000005**

(87) International publication number:
**WO 2013/125944 (29.08.2013 Gazette 2013/35)**

(54) **METHOD AND APPARATUS FOR CONTROLLING THE ATMOSPHERE IN A SPACE FILLED WITH AGRICULTURAL OR HORTICULTURAL PRODUCE**

VERFAHREN UND VORRICHTUNG ZUR STEUERUNG DER ATMOSPHÄRE IN EINEM RAUM MIT LANDWIRTSCHAFTS- ODER GARTENBAUPRODUKTEN

PROCÉDÉ ET APPAREIL POUR RÉGULER L'ATMOSPHÈRE DANS UN ESPACE REMPLI DE PRODUITS AGRICOLES OU HORTICOLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.02.2012 NL 2008346**

(43) Date of publication of application:
**31.12.2014 Bulletin 2015/01**

(73) Proprietor: **Van Amerongen Controlled Atmosphere Technology B.V**
**4004 MB Tiel (NL)**

(72) Inventor: **VELTMAN, Rob Henk**
**NL-6522 CT Nijmegen (NL)**

(74) Representative: **Arnold + Siedsma**
**Bezuidenhoutseweg 57**
**2594 AC The Hague (NL)**

(56) References cited:
**WO-A1-2006/086827**     **WO-A1-2011/113915**
**US-A- 5 791 236**     **US-A1- 2009 169 689**

**Description**

The invention relates to a method for controlling the atmosphere in a closable space at least partially filled with agricultural or horticultural products, the method comprising:

directly detecting the respiration of the agricultural or horticultural products; and
adjusting an oxygen content, a carbon dioxide content and a nitrogen content in the space subject to the detected respiration. Such a method is known from WO 2011/113915 A1.

Proper storage of agricultural and horticultural products is of great importance. Such products are usually harvested only once a year and, in order to maintain a good price level, have to be brought onto the market in a constant supply over a period of time. It is known that agricultural and horticultural products can be stored for a long time if they are stored in a controlled atmosphere (CA). A controlled atmosphere is understood here to mean an atmosphere, with a composition, particularly the oxygen content, the carbon dioxide content and the nitrogen content, which is maintained within precisely determined limits.

The oxygen content is of particularly great importance for a long storage life; this must be kept as low as possible. This is because fresh agricultural and horticultural products exhibit respiration during storage; they take up oxygen from the atmosphere and use it to convert or combust complex molecules such as glucose, wherein energy is released. This respiration is accompanied by ripening of the products, whereby their storage life is limited.

In order to prevent premature ripening, fruit such as for instance apples or pears is stored in an atmosphere with a very low oxygen content known as ULO (Ultra-Low Oxygen) storage. For pears the oxygen content amounts to for instance 2-3 percent, while for apples it even amounts to 0.8-1.5 percent.

Although a reduction of the oxygen content results in principle in a longer storage life, there are limits to the possible reduction. This is because there is a risk, if the oxygen content becomes too low, of respiration or aerobic respiration transposing into fermentation, or anaerobic respiration. In fermentation, which can be seen as "emergency respiration" of the products, glucose is converted into carbon dioxide and (in the case of fresh horticultural products) alcohol. If fermentation continues for too long it results in damage to the products, whereby they become unsaleable.

Despite this risk, there is nevertheless a need in the case of some agricultural and horticultural products for a further reduction in the oxygen content at which the products are stored. This is dictated mainly by the wish to prevent storage defects. Chemical agents have heretofore usually been used for this purpose, but the use hereof is increasingly being called into question. Apples and pears for instance are currently still treated with DPA (diphenylamine) after being picked so as to prevent scald, a peel disorder in which black discolourations occur which render the fruit worthless. The use of this agent has however been prohibited in Europe since 2012.

In order to enable further reduction of the oxygen content at which fruit is stored it is necessary that the transition from respiration to fermentation can be clearly determined, so that timely measures can be taken to prevent product damage.

Different methods are already known for timely detection of the occurrence of fermentation.

A first method is based on measurement of the alcohol formed during the fermentation. In this known method samples of the fruit stored in a storage space are taken periodically, for instance weekly. These samples, which can for instance consist of a few apples or pears, are analysed in a laboratory, wherein the ethanol content in the flesh is determined by chemical analysis. A problem of this known method is that it depends on the proximity of a well-equipped laboratory, while the labour and the transport of the samples are time-consuming and expensive. Because alcohol measurements can in practice not be performed in the storage space itself, this method is not suitable for implementation in a measuring and control system connected to the space.

Another known method is described in "The harvest watch system - measuring fruit's healthy glow", B.E. Stephens and D.J. Tanner, ISHS Acta Horticulturae 687: International Conference Postharvest Unlimited Downunder 2004. This is based on measuring the fluorescence of the chlorophyll in the peel, which would be an indicator of the state of health of the fruit, particularly the amount of chlorophyll. The method is based on illuminating a sample of the stored fruit and deriving the risk of fermentation from the measured fluorescence. The relation between the detected fluorescence of the peel and the occurrence of fermentation is however found not to be unambiguous in practice, whereby this method is not wholly reliable.

The stated document WO 2011/113915 A1 describes a method and a system for ULO storage of fruit or other produce, particularly apples, wherein continuous measurement takes place of the change in the oxygen and carbon dioxide content in the storage space in order to derive therefrom the respiratory activity of the stored fruit. On the basis of this respiratory activity, and taking into account the effect of leakages in the storage space, the atmosphere in the space is then continuously controlled by supplying oxygen when the value of a parameter GERQ (gas exchange rate quotient) changes. The known method is found to be particularly suitable for use under laboratory conditions, since it is not easily possible in practice to continuously measure and control the respiration of fruit in a conditioned storage space.

Prior art document US 5 791236 A discloses a system for controlling the air composition within a storage room for breathing vegetable products. The storage room is connected to elements for controlling the oxygen content of the atmosphere in the storage room and comprises one or more sensors for sensing the air composition in the storage room. A processor is available for receiving the sensor signals and supplying control signals to oxygen content controlling elements. Furthermore the storage room comprises sensors for determining the development of metabolites in the vegetable products at the transfer of normal breathing to fermentation. The processor based on the signals, delivered by the sensors, controls the oxygen content controlling elements such that the vegetable products are stored in an air composition in which the oxygen contents is as low as possible without fermentation occurring.

Prior art document WO 2006/086827 A1 discloses a method, system and apparatus for maintaining a controlled atmosphere having a high carbon dioxide content in a sealed container. In the method, the container is substantially impermeable to oxygen and carbon dioxide and contains respiring horticultural produce. The method comprises monitoring the oxygen or carbon dioxide content in the atmosphere and, when the oxygen content approaches a level at which the produce becomes anaerobic, delivering a gas containing oxygen into the container such that the oxygen content in the atmosphere is again sufficient to allow the produce to respire. The high carbon dioxide content in the atmosphere causes the storage life of the produce to be extended.

There therefore exists a need for a practical method with which the atmosphere in a closable storage space for agricultural or horticultural products can be controlled in reliable manner such that the risk of fermentation, even at very low oxygen levels, can be substantially wholly precluded. According to the invention this is achieved in that:

the respiration is detected periodically, in each case for a determined time; and
the space is sealed off from external influences during detection of the respiration, wherein the space has a leak-tightness of less than 0.2 cm2 per 100 m3 during detection of the respiration, wherein the space (1) is brought to a higher pressure than the surrounding area prior to detection of the respiration,
an adjusting apparatus for the oxygen content, the carbon dioxide content and the nitrogen content which is connected to the space is switched off during detection of the respiration, and
adjusting means for the temperature connected to the space are switched off during detection of the respiration.

Taking the actual respiration as a starting point, a better control is achieved than would be possible on the basis of previous test results or theoretical models. The periodic detection for some time in a completely isolated atmosphere also makes it possible to measure small differences in oxygen and carbon dioxide content in reliable manner. The 'accumulation' of respiratory products, particularly carbon dioxide, is then as it were measured. Switching off the adjusting apparatus provides for a reliable detection. Making the space substantially completely leakage-tight, at least during detection of the respiration further improves the reliability of the detection. Bringing the space to a higher pressure than the surrounding area prior to detection of the respiration prevents oxygen-rich ambient air penetrating the space through possibly remaining small leaks, whereby the detection would be disrupted. This can take place in simple manner by injecting a quantity of gas, for instance nitrogen.

In order to obtain a more reliable picture of the state of the products without the measurements disrupting the storage process, the respiration can be detected for at least one hour at a time, preferably for several hours. A properly measurable 'accumulation' of carbon dioxide and a properly measurable decrease in the oxygen concentration are thus obtained.

When the atmosphere in the space is set into or kept in motion during detection of the respiration, the respiratory products are distributed uniformly through the space so that a more reliable detection is achieved.

During a measurement, which generally takes a number of hours, all conditioning equipment can thus be switched off, with the possible exception of the ventilation, and the cooling cell as it were 'shut down'. All that then takes place is the measurement at fixed times of the temperature and the gas conditions in the cooling cell.

In order to minimize the measurement and control efforts it is recommended that days or even weeks pass between successive detections. Once a low-oxygen atmosphere has been set, the state of the stored produce only changes slowly, so that it is still possible with such a periodic measurement to take timely action if there is imminent danger of fermentation.

A simple control is obtained when the respiration of the agricultural or horticultural produce is detected by measuring their oxygen absorption, measuring their carbon dioxide release and determining the ratio thereof, and the oxygen content in the space is decreased as long as the thus determined ratio remains substantially constant. A measure for this ratio is the so-called respiratory quotient (RQ), defined as the quotient of the carbon dioxide formed by the respiration and the oxygen consumed:

$$RQ = \text{produced } CO_2 \,/\, \text{absorbed } O_2 \qquad (I)$$

A constant ratio of oxygen absorption and carbon dioxide release indicates a normal respiration, so that the limit at which fermentation occurs has then apparently not yet been reached. The oxygen content can in that case be further reduced, either actively by extracting oxygen from the storage space or passively by not replenishing the oxygen consumed in the respiration.

In order to prevent loss of quality of the stored produce it is recommended that the oxygen content in the space is increased at least temporarily as soon as the ratio of oxygen absorption and carbon dioxide release changes considerably. Such a change does after all indicate fermentation, and this process can be halted and even reversed to a limited extent by increasing the oxygen content in the space.

In order to obtain a good picture of the respiration, a detection preferably comprises a number of measurements of the oxygen absorption and carbon dioxide release. The number of measurements has to be statistically reliable here in order to achieve a reliable control.

The invention also relates to an installation with which the above described method can be performed. An installation known from WO 2011/113915 A1 for controlling the atmosphere in a closable space at least partially filled with agricultural or horticultural products comprises:

a controllable apparatus for adjusting an oxygen content, a carbon dioxide content and a nitrogen content in the space, the adjusting apparatus further having means for adjusting a pressure in the space and means for adjusting a temperature in the space;
a control system connected to this adjusting apparatus; and
means connected to the control system for directly detecting the respiration of the agricultural or horticultural products. The CA or ULO storage is most effective at low temperature, in the order of several degrees above freezing point.

The installation according to the invention is distinguished from the known installation in that the control system is configured:

to periodically switch on the respiration detection means for a determined period at a time;
to seal off the space from external influences when the respiration detection means are switched on;
to switch on the pressure adjusting means in order to bring the space to a higher pressure than the surrounding area before the respiration detection means are switched on; and
to switch off the adjusting apparatus when the respiration detection means are switched on. A reliable 'accumulation measurement' of the respiration products can thus be performed.

The control system can advantageously be configured here to keep the respiration detection means switched on for at least one hour at a time, preferably for several hours in succession, in order to achieve sufficient 'accumulation' to bring about an easily measurable decrease in the oxygen content and increase in the carbon dioxide content respectively.

These respiration detection means can preferably comprise at least one oxygen meter and at least one carbon dioxide meter.

Further preferred embodiments of the installation according to the invention are described in the dependent claims.

Finally, the invention relates to a closable space for storing agricultural or horticultural products in a controlled atmosphere which can be provided with an installation as described above. According to the invention such a space has the feature that it is substantially completely leakage-tight, at least when the respiration detection means are operating, wherein the space has a leak-tightness of less than 0.2 cm$^2$ per 100 m$^3$, preferably less than 0.15 cm$^2$ per 100 m$^3$ and more preferably in the order of 0.1 cm$^2$ per 100 m$^3$.

The invention will now be elucidated on the basis of an embodiment, wherein reference is made to the accompanying drawing, in which

Figure 1 is a schematic view of a storage space for agricultural or horticultural products with an installation for controlling the atmosphere according to the invention,
Figure 2 shows a graph in which the formation of carbon dioxide is shown as a function of the oxygen pressure,
Figure 3 is a curve showing the progression of the respiratory quotient as a function of the oxygen content in the storage space,
Figure 4 is a graph showing the measured oxygen absorption and carbon dioxide release of fruit in the storage space, and
Figure 5 is a schematic view of the progression of a measuring cycle for detecting the respiration of fruit in the storage space.

A space 1 for storing agricultural or horticultural products, for instance fruit, is closed on all sides. In practice this is a space 1 which is suitable for storage of several tens or even hundreds of tons of fruit.

Arranged in one of the walls of space 1 is an opening 2 through which the fruit can be carried into and removed from the space. This opening 2 can be hermetically sealed by a door 3. Connected to space 1 is an installation 4 which controls the atmosphere in space 1. This installation 4 comprises an adjusting apparatus 5 for adjusting the content of oxygen $O_2$, the content of carbon dioxide $CO_2$ and the content of nitrogen $N_2$ in the space and for adjusting the temperature T in space 1. Installation 4 further comprises a control system 6 which is connected to adjusting apparatus 5.

Adjusting apparatus 5 comprises a module 7 for adjusting the oxygen content, such as an oxygen generator, and a module 8 for adjusting the carbon dioxide content. The carbon dioxide module 8 can comprise a so-called $CO_2$ scrubber. A module 9 for adjusting the nitrogen content, such as a nitrogen generator, also forms part of adjusting apparatus 5. In addition, adjusting apparatus 5 comprises a cooling unit 10 for controlling the temperature in space 1. Installation 4 also comprises means 17 for setting the air in space 1 into motion. These moving means 17, which can also be controlled by control system 6, can for instance take the form of one or more fans. Control system 6 comprises a processing unit 11 which is connected in controlling manner to the different modules 7-10, and an input and output unit 12, for instance in the form of a workstation or PC with screen, keyboard and printer.

Up to this point the installation 4 is substantially the same as a conventional installation for controlling the atmosphere. The control installation serves to reduce the content of oxygen $O_2$ as quickly as possible in space 1 as soon as the fruit has been placed in space 1 and this space has been sealed by closing the door 3. This oxygen content amounts to 21 percent in the outside air, and for the storage under CA or ULO conditions is reduced to 2-3 percent in the case of pears and 0.8-1.5 percent in the case of apples. Control system 6 activates for this purpose the nitrogen module 9, which generates and feeds nitrogen $N_2$ to space 1, whereby oxygen $O_2$ is displaced out of space 1. The content of carbon dioxide $CO_2$ in space 1 is regulated here by the carbon dioxide module or scrubber 8 which removes the carbon dioxide formed by the respiration of the fruit. The cooling 10 is also activated after closing of space 1 in order to reduce the temperature in the space to a value which, depending on the stored product, can vary from -2 to 15°C. The fruit can be stored for longest at these low temperatures. This part of the control takes place under the influence of a program which is executed by control system 6 and which can be based on results of previous tests or on theoretical theses.

Control installation 4 according to the invention is distinguished from conventional installations in the first instance by the presence of an oxygen sensor 13 and a carbon dioxide sensor 14, which in the shown embodiment are arranged in space 1 and which are connected for signal generation to control system 6. Just as the rest of control installation 4, these sensors 13, 14 could otherwise be arranged outside space 1 and connected via sampling lines to space 1. The oxygen absorption and the carbon dioxide release, which together define the respiratory activity of the fruit, can be measured directly using sensors 13, 14. Hereby obtained is a clear picture of the respiration of the fruit which can function as basis for further control of the composition of the atmosphere in space 1.

Control installation 4 is further provided according to the invention with means for setting a determined pressure in space 1. In practice there must be a slight overpressure in space 1 relative to the surrounding area. Such an overpressure prevents possible leakages resulting in ambient air with a greatly differing composition - in particular much too high an oxygen content - being able to penetrate into space 1. The pressure adjusting means comprise in the shown embodiment a first pressure gauge 15 in space 1 and a second pressure gauge 16 outside it. Both pressure gauges 15, 16 are connected to processing unit 11 of control system 6 which determines a pressure difference between space 1 and the surrounding area on the basis of the measurement signals. If this pressure difference is too small or even negative, a gas or gas mixture is introduced into space 1 in order to increase the pressure therein. In the shown embodiment the control system controls the nitrogen generator 9, which introduces nitrogen into space 1 until the pressure therein has been increased sufficiently relative to the ambient pressure.

The operation of the above described control installation 4 is now as follows.

When the oxygen content in space 1 has been reduced according to the control program to a value usual for CA or ULO storage, the further control of the atmosphere in space 1, and particularly the further reduction of the oxygen content, is carried out on the basis of the actual respiratory activity of the stored fruit detected using the oxygen and carbon dioxide sensors 13, 14. This is referred to by applicant as Dynamic Controlled Respiration (DCR).

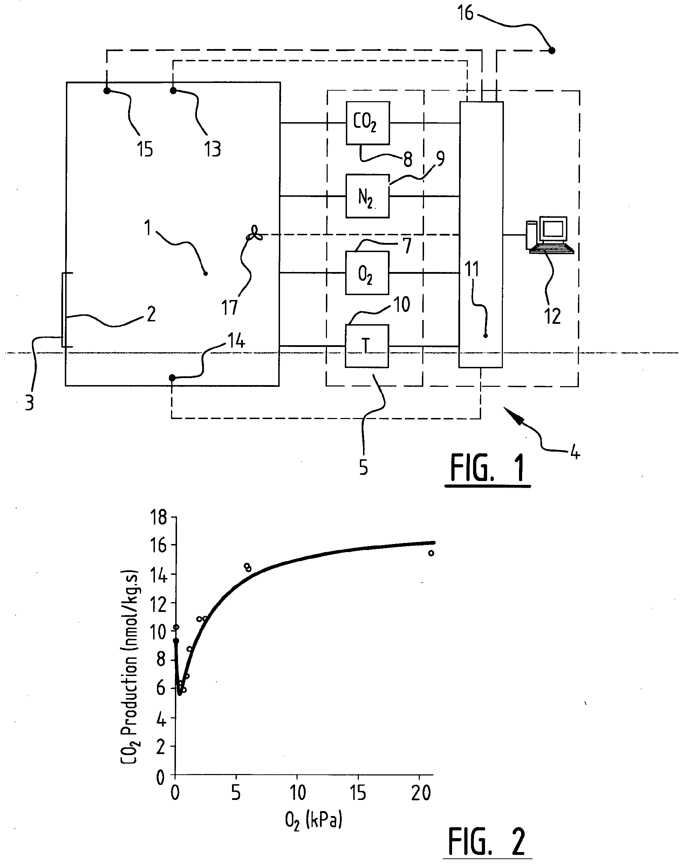

It is known that the respiration rate of fruit decreases as the oxygen content in space 1 falls, although this decrease is not linear, as shown in figure 2. In this figure, in which the $CO_2$ production of the fruit is plotted against the oxygen pressure, the drawn points are actual measuring points from practical tests, while the line is a model based on the estimated activity of enzymes involved in the reactions. When the oxygen pressure or the oxygen content in space 1 decreases further, there comes a moment when the $CO_2$ production will suddenly increase greatly. This is the result of fermentation. The transition point, at which the production of carbon dioxide is minimal, is the anaerobic compensation point ACP.

For the purpose of controlling the atmosphere in space 1 use is made of the ratio of the oxygen absorption and the carbon dioxide release. As stated, this ratio can be expressed in a respiratory quotient RQ:

EP 2 816 890 B1

$$RQ = produced\ CO_2\ /\ absorbed\ O_2 \qquad\qquad (I)$$

In the case that glucose is combusted, the respiratory quotient RQ = 1. This follows from the chemical formula for the respiration:

$$C_6H_{12}O_6 + 6O_2 => 6CO_2 + 6H_2O \qquad (II)$$

Energy is released during the respiration, on the one hand in the form of ATP (Adenosine Triphosphate, the generic energy carrier in living organisms) and on the other as heat.

That the respiratory quotient RQ increases at the transition from respiration to fermentation follows from the fact that for fermentation purposes no oxygen is absorbed while carbon dioxide is being produced, as shown from the applicable chemical formula:

$$C_6H_{12}O_6 => 2CO_2 + 2C_2H_5OH \qquad (III)$$

Energy is also released during this conversion, be it considerably less than during respiration.

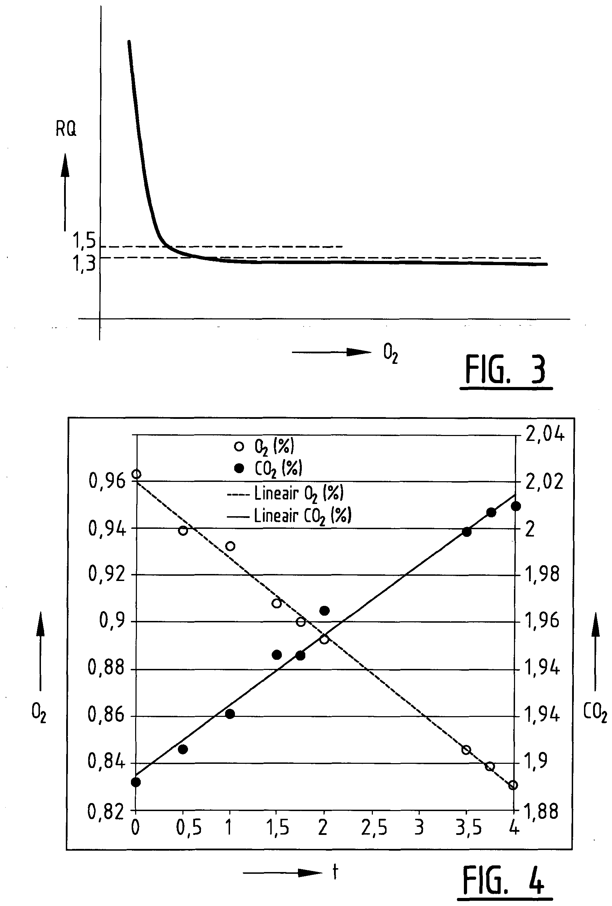

The transition from respiration to fermentation can be clearly shown on the basis of the respiratory quotient RQ (figure 3). The control of the atmosphere in space 1 on the basis of the detected respiration therefore consists of the ratio of the oxygen absorption and carbon dioxide release being determined, for instance by calculating the respiratory quotient RQ, and the oxygen content in space 1 being reduced as long as this ratio remains substantially constant. However, as soon as the ratio is no longer constant but changes distinctly, as indicated in the graph of the respiratory quotient RQ by a sharp bend, the anaerobic compensation point ACP has been reached and the oxygen content in space 1 has to be increased in order to prevent damage to the fruit. Where an RQ value of about 1 is usual, a rise above a value of for instance 1.5 is in principle risky, so action has to be taken.

In a practical embodiment of installation 4 the control system 6 is programmed to lower the oxygen content by 0.1 percent at a time, as long as the respiratory quotient RQ is less than 1.3. As stated, this can be done actively or passively. When the respiratory quotient has a value lying between 1.3 < RQ < 1.5, control system 6 is programmed not to influence the oxygen content. However, as soon as the respiratory quotient is detected as rising to RQ > 1.5, control system 6 intervenes to increase the oxygen content.

For this purpose control system 6 switches on the ventilation 7, which introduces oxygen into space 1. The oxygen content need only be increased so much that the normal, aerobic respiration is resumed. Only the most recent state, in which respiration was still being detected and wherein the respiratory quotient RQ was thus still constant, need be restored for this purpose. Because control system 6 is configured to store and/or print the measured values, this previous state can be restored in simple manner so that control system 6 can determine how long ventilation 7 has to remain switched on. It is also possible to increase the oxygen content by a predetermined amount, for instance 0.2 percent at a time.

Reducing the oxygen content as long as detection indicates that there is respiration but no fermentation can take place both actively and passively. Active reduction entails control system 6 switching on nitrogen generator 9, while a passive reduction of the oxygen content takes place as a result of the continuing respiratory activities of the fruit.

For a reliable detection of the respiratory activities it is necessary for all external influences to be removed. To this end the control system 6 switches off adjusting apparatus 5 completely. Oxygen module 7, carbon dioxide module 8, nitrogen module 9 and cooling 10 are thus deactivated, whereby storage space 1 is as it were 'shut down'. This happens only after control system 6 has determined that the overpressure in space 1 is sufficient to prevent ambient air penetrating into the space. Should the overpressure be insufficient, it can then be restored by introducing a determined volume of gas, for instance nitrogen or oxygen. Moving means 17 can remain operational since a mild form of ventilation provides for a certain mixing of the air in the space, whereby the detection can be more precise.

In this situation the oxygen content and carbon dioxide content are thus no longer determined by adjusting apparatus 5 but solely by the respiratory activities of the stored fruit. Adjusting apparatus 5 can otherwise not remain switched off for too long at a time because the temperature in space 1 then rises too sharply. Practical tests have shown that a detection which takes several hours, for instance four hours, need not be a problem. Such a duration is sufficient to achieve an easily measurable 'accumulation' of carbon dioxide produced by the fruit and a likewise easily measurable decrease in the oxygen content.

For a reliable detection of the respiration it is in addition necessary for space 1 to be substantially completely leakage-tight. Because the oxygen content in the outside air is 21 percent, only a slight leak would already result in much too high a detection of the oxygen content and thereby in the respiratory quotient RQ being underestimated. In the method according to the invention higher standards for storage space 1 are therefore set than has heretofore been usual for CA or ULO storage. The leak-tightness therefore has to be lower than 0.2 cm$^2$ per 100 m$^3$, and preferably much lower. Space 1 preferably has leaks with a maximum surface area of 0.15 cm$^2$ per 100 m$^3$, and preferably in the order of 0.10 cm$^2$ per 100 m$^3$.

The detection consists of performing measurements at set intervals using oxygen sensor 13 and carbon dioxide sensor 14. Figure 4 shows that, during a number of hours of detection, there is a substantially linear decrease in the oxygen content in space 1 while there is simultaneously a substantially linear increase in the carbon dioxide content. The respiratory quotient RQ is found in this embodiment to be slightly greater than 1 because not only glucose is combusted as according to formula II, but for instance also malate (malic acid), which is first converted to glucose, wherein carbon dioxide is also produced.

The detections are repeated periodically, initially for instance every day. The longer the products are stored, the further the frequency at which detection takes place can be reduced, since the changes in the atmosphere in space 1 become increasingly smaller. A detection can then be performed for instance once every two or three days, or even once a week.

Although there were nine individual measurements in the test which resulted in figure 4, it is probably possible in practice to suffice with three to five measurements to obtain a reliable detection. This figure 4 also shows that a valid measurement value is not found at each point in time. The measurements which took place after 2.5 and 3 hours are thus not included in the results here because they differed too much from the surrounding and historical measurement values.

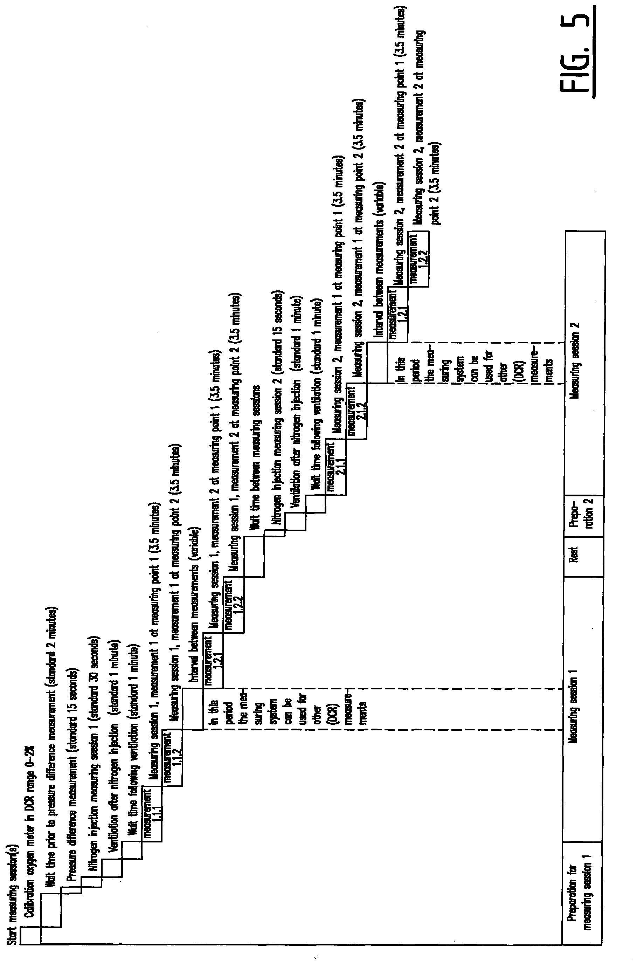

Figure 5 shows the steps of a typical measuring cycle which can be used in practice. This is based on measurement at two different points in storage space 1 where two measurements are performed in each case at a determined interval.

The first step is calibration of the oxygen meter in the range relevant for the DCR control, i.e. 0 to 2 percent $0_2$. Adjusting apparatus 5 is then switched off. Only the moving means or fans 17 can continue to operate at a reduced rotation speed for a slight mixing during the measurement. This mixing is not continuous but takes place only when a measurement of the oxygen content and carbon dioxide content is actually being performed. The fans can for instance be switched on a minute before the start of a measurement and switched off again immediately after ending of the measurement.

After adjusting apparatus 5 has been switched off, there follows a waiting period, here of two minutes, for the purpose of easing turbulence and equalizing pressure differences in space 1. A measurement is then made of the pressure difference between storage space 1 and the surrounding area. Although not shown in figure 5, a temperature measurement can take place simultaneously in space 1. The relative humidity and the ethylene content could optionally also be measured. Nitrogen is then introduced into space 1 so as to being about a sufficient overpressure. Moving means 17 are then switched on in order to ventilate space 1 and there follows a waiting period, for instance of a minute.

The first measuring session can then be started by performing a measurement at the first measuring point. This measurement takes 3.5 minutes in the shown example. A measurement is then performed, likewise for 3.5 minutes, at another point in space 1. The first values for the oxygen content and the carbon dioxide content in space 1 are hereby known. There then follows a waiting period before a subsequent measurement is performed. In the example of figure 4 the measurements are repeated every half-hour so that the waiting time between two sessions amounts in this example to 30 - 2 x 3.5 = 23 minutes. During this period the measuring system can be used for measurements in other storage spaces.

In a subsequent step, measurements are again performed at measuring points 1 and 2, whereby values of the oxygen content and the carbon dioxide content are thus known once again. On the basis of the difference between the measured values, the decrease in the oxygen content and the simultaneous production of carbon dioxide can be determined, and so therefore the respiratory quotient RQ. Control system 6 is configured here to disregard measured values varying too much from the expected outcomes. A measurement can thus for instance be declared invalid if the difference between the measured values at the one and the other measuring point exceeds a determined threshold, for instance if the measured oxygen contents, carbon dioxide contents or the values for the respiratory quotient RQ calculated therefrom differ by more than 10% from each other. Control system 6 can also declare a measurement invalid if the temperature or pressure in space 1, which is monitored continuously during the measuring session, differs too much from the limited values.

In the shown example the above described measuring session is repeated once again after a determined waiting period in order to obtain a control measurement. This second measuring session also begins with injection of nitrogen, ventilation and waiting, after which measuring takes place once again at two different points in space 1. These measurements are then repeated again following a determined interval so that two values of oxygen content and carbon dioxide content, from which the respiratory quotient RQ can be calculated, are also known at each measuring point in the control session. It is here also the case that the measured values are only accepted if they do not vary too much from each other and from the expected measured values. The two measuring sessions are also declared invalid if the measurement values of the second measuring session differ greatly from those of the first measuring session.

If the two measuring sessions are indeed valid, the average of the respiratory quotient of the first measuring session and the respiratory quotient of the second measuring session is determined and used as average respiratory quotient RQavg to control the oxygen content in space 1. The average of the starting times of the first and second measuring sessions is used here as time of detection.

Each measuring session can of course consist in practice of more than two measurements. As stated, three to five measurements per measuring session will probably be necessary and sufficient for good control of the atmosphere. Each measuring session can last a number of hours (the example of figure 4 is based on four hours), and the waiting time between two successive sessions in a single measuring cycle can also amount to a few hours. The time axis in figure 5 is therefore not to scale.

The invention makes it possible in the above described manner to adjust the control of the climate in a space filled with agricultural or horticultural products to the actually detected respiratory activities of the stored produce. A more reliable control is hereby possible, wherein the oxygen content can be reduced further than is possible according to the prior art. In practical tests oxygen contents of 0.2 - 0.5 percent have been achieved without fermentation occurring.

Reducing the oxygen content to substantially the theoretical minimum, the anaerobic compensation point ACP, prevents respiration of the products, and therefore their deterioration, as long as possible. This increases the storage life so that the produce can be brought onto the market gradually over time, whereby a good price can be obtained for them. Applying an oxygen content close to the ACP can moreover prevent the occurrence of storage defects, such as for instance scald, without having to make use of chemicals for this purpose. Finally, the decrease in the respiration results in a decrease of the heat developing in space 1 so that less cooling capacity is also required, this resulting in savings.

Although the invention is elucidated above with reference to an embodiment, it is not limited thereto. Installation 4 could for instance be used to control the atmosphere in several different spaces 1, wherein these spaces 1 can also be filled with different products. The measurements can also be performed more frequently or less frequently than described here, and it is possible to opt for a shorter or longer detection period. Other parameters could further also be measured, such as for instance the ethylene content in space 1, which forms an indication of the stage of ripening of the fruit.

The scope of the invention is defined solely by the following claims.

## Claims

1. Method for controlling the atmosphere in a closable space (1) at least partially filled with agricultural or horticultural products, the method comprising:

   - directly detecting the respiration of the agricultural or horticultural products; and
   - adjusting an oxygen content, a carbon dioxide content and a nitrogen content in the space (1) subject to the detected respiration;

   **characterized in that:**

   - the respiration is detected periodically, in each case for a determined time; and
   - the space (1) is sealed off from external influences during detection of the respiration, wherein the space (1) has a leak-tightness of less than 0.2 $cm^2$ per 100 $m^3$ during detection of the respiration, wherein the space (1) is brought to a higher pressure than the surrounding area prior to detection of the respiration,
   - an adjusting apparatus (5) for the oxygen content, the carbon dioxide content and the nitrogen content which is connected to the space (1) is switched off during detection of the respiration, and
   - adjusting means (10) for the temperature connected to the space (1) are switched off during detection of the respiration.

2. Method as claimed in claim 1, **characterized in that** the respiration is detected for at least one hour at a time, preferably for several hours.

3. Method as claimed in claim 1 or 2, **characterized in that** the atmosphere in the space (1) is set into or kept in motion during detection of the respiration.

4. Method as claimed in any of the foregoing claims, **characterized in that** days or weeks can pass between successive detections.

**5.** Method as claimed in any of the foregoing claims, **characterized in that** the respiration of the agricultural or horticultural produce is detected by measuring their oxygen absorption, measuring their carbon dioxide release and determining the ratio (RQ) thereof, and the oxygen content in the space (1) is decreased as long as the thus determined ratio (RQ) remains substantially constant.

**6.** Method as claimed in claim 5, **characterized in that** the oxygen content in the space (1) is increased at least temporarily as soon as the ratio (RQ) of oxygen absorption and carbon dioxide release changes considerably.

**7.** Method as claimed in claim 5 or 6, **characterized in that** a detection comprises a number of measurements of the oxygen absorption and carbon dioxide release.

**8.** Installation (4) for controlling the atmosphere in a closable space (1) at least partially filled with agricultural or horticultural products, comprising:

- a controllable apparatus (5) for adjusting an oxygen content, a carbon dioxide content and a nitrogen content in the space (1), the adjusting apparatus (5) further having means for adjusting a pressure in the space (1) and means (10) for adjusting a temperature in the space (1);
- a control system (6) connected to this adjusting apparatus (5); and
- means (13, 14) connected to the control system (6) for directly detecting the respiration of the agricultural or horticultural products;

**characterized in that:**

the control system (6) is configured:

- to periodically switch on the respiration detection means (13, 14) for a determined period at a time;
- to seal off the space (1) from external influences when the respiration detection means (13, 14) are switched on;
- to switch on the pressure adjusting means in order to bring the space (1) to a higher pressure than the surrounding area before the respiration detection means (13, 14) are switched on; and
- to switch off the adjusting apparatus (5) when the respiration detection means (13, 14) are switched on.

**9.** Installation (4) as claimed in claim 8, **characterized in that** the control system (6) is configured to keep the respiration detection means (13, 14) switched on for at least one hour at a time, preferably for several hours in succession.

**10.** Installation (4) as claimed in claim 8 or 9, **characterized by** means (17) for setting the atmosphere in the space (1) into motion, wherein the control system (6) is configured to switch on the moving means (17) when the respiration detection means (13, 14) are switched on.

**11.** Installation (4) as claimed in any of the claims 8-10, **characterized in that** the control system (6) is configured to switch on the respiration detection means (13, 14) at intervals of several days to several weeks.

**12.** Installation (4) as claimed in any of the claims 8-11, **characterized in that** the respiration detection means (13, 14) comprise at least one oxygen meter (13) and at least one carbon dioxide meter (14), and the control system (6) is configured to determine the ratio (RQ) of a measured oxygen absorption and a measured carbon dioxide release of the agricultural or horticultural produce and to control the adjusting apparatus (5) so as to decrease the oxygen content in the space (1) as long as the thus determined ratio (RQ) remains substantially constant.

**13.** Installation (4) as claimed in claim 12, **characterized in that** the control system (6) is configured to control the adjusting apparatus (5) so as to increase the oxygen content in the space (1) at least temporarily as soon as the ratio (RQ) of oxygen absorption and carbon dioxide release changes considerably.

**14.** Installation (4) as claimed in claims 12 or 13, **characterized in that** the oxygen meter (13) and the carbon dioxide meter (14) are configured to perform a number of measurements when the respiration detection means (13, 14) are operating.

**15.** Closable space (1) for storing agricultural or horticultural products in a controlled atmosphere which is provided with an installation (4) as claimed in any of the claims 8-14, **characterized in that** the space (1) is substantially completely leakage-tight, at least when the respiration detection means (13, 14) are operating, wherein the space (1) has a leak-tightness of less than 0.2 cm$^2$ per 100 m$^3$, preferably less than 0.15 cm$^2$ per 100 m$^3$ and more preferably in the order of 0.10 cm$^2$ per 100 m$^3$.

**Patentansprüche**

1. Verfahren zum Steuern der Atmosphäre in einem verschließbaren Raum (1), der mindestens teilweise mit Agrar- oder Gartenbauprodukten gefüllt ist, wobei das Verfahren aufweist:

   direktes Erfassen der Respiration der Agrar- oder Gartenbauprodukte und
   Einstellen eines Sauerstoffgehalts, eines Kohlendioxidgehalts und eines Stickstoffgehalts in dem Raum (1), der der erfassten Respiration ausgesetzt ist,

   **dadurch gekennzeichnet, dass**:

   die Respiration periodisch erfasst wird, jedenfalls zu einer vorbestimmten Zeit, und
   der Raum (1) von äußeren Einflüssen während der Erfassung der Respiration abgedichtet ist, wobei der Raum (1) eine Leckdichte von weniger als 0,2 cm$^2$ pro 100 m$^3$ während der Erfassung der Respiration hat, wobei der Raum (1) vor der Erfassung der Respiration auf einen höheren Druck als der umgebende Bereich gebracht wird, eine Einstellvorrichtung (5) für den Sauerstoffgehalt, den Kohlendioxidgehalt und den Stickstoffgehalt, die mit dem Raum (1) verbunden ist, während der Erfassung der Respiration abgeschaltet ist, und Einstellmittel (10) für die Temperatur, die mit dem Raum (1) verbunden sind, während der Erfassung der Respiration ausgeschaltet sind.

2. Verfahren nach Anspruch 1, **dadurch gekennzeichnet, dass** die Respiration für mindestens 1 Stunde pro Mal, vorzugsweise für einige Stunden erfasst wird.

3. Verfahren nach Anspruch 1 oder 2, **dadurch gekennzeichnet, dass** die Atmosphäre in dem Raum während der Erfassung der Respiration in Bewegung gesetzt oder gehalten wird.

4. Verfahren nach einem der vorstehenden Ansprüche, **dadurch gekennzeichnet, dass** zwischen aufeinanderfolgenden Erfassungen Tage oder Wochen vergehen können.

5. Verfahren nach einem der vorstehenden Ansprüche, **dadurch gekennzeichnet, dass** die Respiration der Agrar- oder Gartenbauprodukte durch Messung ihrer Sauerstoffabsorption, Messung ihrer Kohlendioxid-Freigabe und Bestimmung ihres Verhältnisses (RQ) erfasst wird und dass der Sauerstoff gehalt in dem Raum (1) so lange vermindert wird, wie das so bestimmte Verhältnis (RQ) im Wesentlichen konstant bleibt.

6. Verfahren nach Anspruch 5, **dadurch gekennzeichnet, dass** der Sauerstoffgehalt in dem Raum (1) mindestens zeitweise erhöht wird, sobald sich das Verhältnis (RQ) von Sauerstoffabsorption und Kohlendioxid-Freigabe wesentlich ändert.

7. Verfahren nach Anspruch 5 oder 6, **dadurch gekennzeichnet, dass** eine Erfassung eine Anzahl von Messungen der Sauerstoffabsorption und der Kohlendioxid-Freigabe umfasst.

8. Installation (4) zum Steuern der Atmosphäre in einem verschließbaren Raum (1), der mindestens teilweise mit Agrar- oder Gartenbauprodukten gefüllt ist, mit:

   einer steuerbaren Vorrichtung (5) zum Einstellen eines Sauerstoffgehalts, eines Kohlendioxidgehalts und eines Stickstoffgehalts in dem Raum (1), wobei die Einstellvorrichtung (5) ferner Mittel aufweist zum Einstellen eines Drucks in dem Raum (1) und Mittel (10) zum Einstellen einer Temperatur in dem Raum (1), einem Steuersystem (6), das mit dieser Einstellvorrichtung (5) verbunden ist, und Mitteln (13, 14), die mit dem Steuersystem (6) verbunden sind, um direkt die Respiration der Agrar- oder Gartenbauprodukte zu erfassen, **dadurch gekennzeichnet, dass**:

   das Steuersystem (6) ausgebildet ist, um:

periodisch die Respirations-Erfassungsmittel (13, 14) für eine vorgegebene Zeitspanne zu einer Zeit einzuschalten,

den Raum (1) gegen äußere Einflüsse abzudichten, wenn die Respirations-Erfassungsmittel (13, 14) eingeschaltet sind,

die Druck-Einstellmittel zu schalten, um den Raum (1) auf einen höheren Druck als den umgebenden Bereich zu bringen, bevor die Respirations-Erfassungsmittel (13, 14) eingeschaltet werden, und

die Einstellvorrichtung (5) abzuschalten, wenn die Respirations-Erfassungsmittel (13, 14) eingeschaltet werden.

9. Installation (4) nach Anspruch 8, **dadurch gekennzeichnet, dass** das Steuersystem (6) ausgebildet ist, um die Respirations-Erfassungsmittel (13, 14) für mindestens eine Stunde bei jedem Mal auszuschalten, vorzugsweise für einige Stunden in Folge.

10. Installation (4) nach Anspruch 8 oder 9, **gekennzeichnet durch** Mittel (17) um die Atmosphäre in dem Raum (1) in Bewegung zu versetzen, wobei das Steuersystem (6) ausgebildet ist, die Bewegungsmittel (17) einzuschalten, wenn die Respirations-Erfassungsmittel (13, 14) eingeschaltet sind.

11. Installation (4) nach einem der Ansprüche 1-10, **dadurch gekennzeichnet, dass** das Steuersystem (6) ausgebildet ist, die Respirations-Erfassungsmittel (13, 14) in Intervallen von mehreren Tagen bis mehreren Wochen einzuschalten.

12. Installation (4) nach einem der Ansprüche 8-11, **dadurch gekennzeichnet, dass** die Respirations-Erfassungsmittel (13, 14) mindestens ein Sauerstoff-Messgerät (13) und mindestens ein Kohlendioxid-Messgerät (14) aufweisen und das Steuersystem (6) ausgebildet ist, um das Verhältnis (RQ) einer gemessenen Sauerstoffabsorption und einer gemessenen Kohlendioxid-Freigabe der Agrar- oder Gartenbauprodukte zu bestimmen und die Einstellvorrichtung (5) so zu steuern, um den Sauerstoffgehalt in dem Raum (1) so lange zu vermindern, wie das erfasste Verhältnis (RQ) im Wesentlichen konstant bleibt.

13. Installation nach Anspruch 12, **dadurch gekennzeichnet, dass** das Steuersystem (6) ausgebildet ist, um die Einstellvorrichtung (5) so zu steuern, um den Sauerstoffgehalt in dem Raum (1) mindestens zeitweise zu erhöhen, sobald das Verhältnis (RQ) der Sauerstoffabsorption und der Kohlendioxid-Freigabe sich deutlich ändert.

14. Installation (4) nach Anspruch 12 oder 13, **dadurch gekennzeichnet, dass** das Sauerstoff-Messgerät (13) und das Kohlendioxid-Messgerät (14) ausgebildet sind, um eine Anzahl von Messungen durchzuführen, wenn die Respirations-Erfassungsmittel (13, 14) in Betrieb sind.

15. Verschließbarer Raum (1) zur Aufnahme von Agrar- oder Gartenbauprodukten in einer gesteuerten Atmosphäre, die durch eine Installation (4) nach einem der Ansprüche 8-14 geschaffen wird, **dadurch gekennzeichnet, dass** der Raum (1) vollständig leckdicht ist, zumindest wenn die Respirations-Erfassungsmittel (13, 14) in Betrieb sind, wobei der Raum (1) eine Leckdichte von weniger als 0,2 $cm^2$ pro 100 $m^3$ aufweist, vorzugsweise von weniger als 0,15 $cm^2$ pro 100 $m^3$ und insbesondere vorzugsweise in der Größenordnung von 0,10 $cm^2$ pro 100 $m^3$.

## Revendications

1. Procédé de régulation de l'atmosphère dans un espace pouvant être fermé (1) au moins partiellement rempli de produits agricoles ou horticoles, le procédé comprenant :

   - la détection directe de la respiration des produits agricoles ou horticoles ; et
   - l'ajustement d'une teneur en oxygène, d'une teneur en dioxyde de carbone et d'une teneur en azote dans l'espace (1) sujet à la respiration détectée ;

   **caractérisé en ce que** :

   - la respiration est détectée périodiquement, dans chaque cas pendant une durée prédéterminée ; et
   - l'espace (1) est hermétiquement fermé aux influences extérieures durant la détection de la respiration, dans lequel l'espace (1) a une étanchéité inférieure à 0,2 $cm^2$ pour 100 $m^3$ durant la détection de la respiration, dans lequel l'espace (1) est amené à une pression supérieure à la zone environnante avant la détection de la respi-

**EP 2 816 890 B1**

ration,
- un appareil d'ajustement (5) pour la teneur en oxygène, la teneur en dioxyde de carbone et la teneur en azote qui est connecté à l'espace (1) est éteint durant la détection de la respiration, et
- des moyens d'ajustement (10) pour la température connecté à l'espace (1) sont éteints durant la détection de la respiration.

2. Procédé selon la revendication 1, **caractérisé en ce que** la respiration est détectée pendant au moins une heure à la fois, de préférence pendant plusieurs heures.

3. Procédé selon la revendication 1 ou 2, **caractérisé en ce que** l'atmosphère dans l'espace (1) est mise ou maintenue en mouvement durant la détection de la respiration.

4. Procédé selon l'une quelconque des revendications précédentes, **caractérisé en ce que** des jours ou des semaines peuvent passer entre des détections successives.

5. Procédé selon l'une quelconque des revendications précédentes, **caractérisé en ce que** la respiration des produits agricoles ou horticoles est détecté en mesurant leur absorption de l'oxygène, en mesurant leur libération du dioxyde de carbone et en déterminant le rapport (RQ) de celles-ci, et la teneur en oxygène dans l'espace (1) est diminuée tant que le rapport ainsi déterminé (RQ) reste sensiblement constant.

6. Procédé selon la revendication 5, **caractérisé en ce que** la teneur en oxygène dans l'espace (1) est augmentée au moins temporairement dès que le rapport (RQ) de l'absorption de l'oxygène et de la libération du dioxyde de carbone change considérablement.

7. Procédé selon la revendication 5 ou 6, **caractérisé en ce qu'**une détection comprend un certain nombre de mesures de l'absorption de l'oxygène et de la libération du dioxyde de carbone.

8. Installation (4) pour la régulation de l'atmosphère dans un espace pouvant être fermé (1) au moins partiellement rempli de produits agricoles ou horticoles, comprenant :

   - un appareil pouvant être régulé (5) pour l'ajustement d'une teneur en oxygène, d'une teneur en dioxyde de carbone et d'une teneur en azote dans l'espace (1), l'appareil d'ajustement (5) ayant en outre des moyens d'ajustement d'une pression dans l'espace (1) et des moyens (10) d'ajustement d'une température dans l'espace (1) ;
   - un système de régulation (6) connecté à cet appareil d'ajustement (5) ; et
   - des moyens (13, 14) connectés au système de régulation (6) pour la détection directe de la respiration des produits agricoles ou horticoles ;

   **caractérisé en ce que** :

   le système de régulation (6) est configuré :

      - pour allumer périodiquement les moyens de détection de la respiration (13, 14) pendant une période déterminée à la fois ;
      - pour fermer hermétiquement l'espace (1) aux influences extérieures lorsque les moyens de détection de la respiration (13, 14) sont allumés ;
      - pour allumer les moyens d'ajustement de la pression afin d'amener l'espace (1) à une pression supérieure à la zone environnante avant que les moyens de détection de la respiration (13, 14) ne soient allumés ; et
      - pour éteindre l'appareil d'ajustement (5) lorsque les moyens de détection de la respiration (13, 14) sont allumés.

9. Installation (4) selon la revendication 8, **caractérisé en ce que** le système de régulation (6) est configuré pour maintenir les moyens de détection de la respiration (13, 14) allumés pendant au moins une heure à la fois, de préférence pendant plusieurs heures successives.

10. Installation (4) selon la revendication 8 ou 9, **caractérisée par** des moyens (17) pour mettre l'atmosphère dans l'espace (1) en mouvement, dans laquelle le système de régulation (6) est configuré pour allumer les moyens de mouvement (17) lorsque les moyens de détection de la respiration (13, 14) sont allumés.

**11.** Installation (4) selon l'une quelconque des revendications 8-10, **caractérisée en ce que** le système de régulation (6) est configuré pour allumer les moyens de détection de la respiration (13, 14) à intervalles de plusieurs jours à plusieurs semaines.

**12.** Installation (4) selon l'une quelconque des revendications 8-11, **caractérisée en ce que** les moyens de détection de la respiration (13, 14) comprennent au moins un appareil de mesure de l'oxygène (13) et au moins un appareil de mesure du dioxyde de carbone (14), et le système de régulation (6) est configuré pour déterminer le rapport (RQ) d'une absorption mesurée de l'oxygène et d'une libération mesurée du dioxyde de carbone des produits agricoles ou horticoles et pour réguler l'appareil d'ajustement (5) de façon à diminuer la teneur en oxygène dans l'espace (1) tant que le rapport ainsi déterminé (RQ) reste sensiblement constant.

**13.** Installation (4) selon la revendication 12, **caractérisée en ce que** le système de régulation (6) est configuré pour réguler l'appareil d'ajustement (5) de façon à augmenter la teneur en oxygène dans l'espace (1) au moins temporairement dès que le rapport (RQ) de l'absorption de l'oxygène et de la libération du dioxyde de carbone change considérablement.

**14.** Installation (4) selon les revendications 12 ou 13, **caractérisé en ce que** l'appareil de mesure de l'oxygène (13) et l'appareil de mesure du dioxyde de carbone (14) sont configurés pour réaliser un certain nombre de mesures lorsque les moyens de détection de la respiration (13, 14) sont en fonctionnement.

**15.** Espace pouvant être fermé (1) pour stocker des produits agricoles ou horticoles dans une atmosphère régulée qui est doté d'une installation (4) selon l'une quelconque des revendications 8-14, **caractérisé en ce que** l'espace (1) est sensiblement complètement étanche, au moins lorsque les moyens de détection de la respiration (13, 14) sont en fonctionnement, dans lequel l'espace (1) a une étanchéité inférieure à 0,2 cm$^2$ pour 100 m$^3$, de préférence inférieure à 0,15 cm$^2$ pour 100 m$^3$ et de manière davantage préférée de l'ordre de 0,10 cm$^2$ pour 100 m$^3$.

FIG. 1

FIG. 2

FIG. 3

FIG. 4

Start measuring session(s)
Calibration oxygen meter in DCR range 0-2%
Wait time prior to pressure difference measurement (standard 2 minutes)
Pressure difference measurement (standard 15 seconds)
Nitrogen injection measuring session 1 (standard 30 seconds)
Ventilation after nitrogen injection (standard 1 minute)
Wait time following ventilation (standard 1 minute)
measurement 1.1.1  Measuring session 1, measurement 1 at measuring point 1 (3.5 minutes)
measurement 1.1.2  Measuring session 1, measurement 1 at measuring point 2 (3.5 minutes)
Interval between measurements (variable)
In this period the measuring system can be used for other (DCR) measurements
measurement 1.2.1  Measuring session 1, measurement 2 at measuring point 1 (3.5 minutes)
measurement 1.2.2  Measuring session 1, measurement 2 at measuring point 2 (3.5 minutes)
Wait time between measuring sessions
Nitrogen injection measuring session 2 (standard 15 seconds)
Ventilation after nitrogen injection (standard 1 minute)
Wait time following ventilation (standard 1 minute)
measurement 2.1.1  Measuring session 2, measurement 1 at measuring point 1 (3.5 minutes)
measurement 2.1.2  Measuring session 2, measurement 1 at measuring point 2 (3.5 minutes)
Interval between measurements (variable)
In this period the measuring system can be used for other (DCR) measurements
measurement 1.2.1  Measuring session 2, measurement 2 at measuring point 1 (3.5 minutes)
measurement 1.2.2  Measuring session 2, measurement 2 at measuring point 2 (3.5 minutes)

| Preparation for measuring session 1 | Measuring session 1 | Rest | Preparation 2 | Measuring session 2 |

FIG. 5

EP 2 816 890 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011113915 A1
- US 5791236 A
- WO 2006086827 A1

**Non-patent literature cited in the description**

- **B.E. STEPHENS ; D.J. TANNER.** The harvest watch system - measuring fruit's healthy glow. *ISHS Acta Horticulturae 687: International Conference Postharvest Unlimited Downunder,* 2004